# EUROPEAN PATENT APPLICATION

(11) **EP 4 340 303 A1**
(43) Date of publication of application: **20.03.2024**
(21) Application number: 22806532.2
(22) Date of filing: 28.04.2022
(51) Int. Cl.: H04L 12/46, H04L 45/16

(54) **DATA FORWARDING METHOD AND APPARATUS, STORAGE MEDIUM, AND ELECTRONIC APPARATUS**

(30) Priority: 10.05.2021 CN 202110507406
(71) Applicant: ZTE Corporation, Shenzhen, Guangdong 518057 (CN)
(72) Inventor: ZHANG, Zheng, Shenzhen, Guangdong 518057 (CN); XU, Benchong, Shenzhen, Guangdong 518057 (CN)
(74) Representative: Novagraaf Technologies
(86) International application number: PCT/CN2022/089971
(87) International publication number: WO 2022/237563

(57) **Abstract**

Embodiments of the present disclosure provide a data forwarding method and apparatus, a storage medium, and an electronic device. The method includes: acquiring, by an ingress node of a Bit Indexed Explicit Replication (BIER) domain, traffic data to be forwarded of an instance; encapsulating, by the ingress node, the traffic data by using a prefix of an address of the BIER domain and an instance label of the instance; and forwarding, by the ingress node, an encapsulated packet obtained by encapsulating the traffic data to a next-hop node of the BIER domain. By the solution, the problem of low data forwarding efficiency is solved, thereby achieving the effect of improving data forwarding efficiency.

## Description

### Cross-Reference to Related Application

The present disclosure is based upon and claims priority to Chinese Patent Application CN202110507406.9 filed to the China National Intellectual Property Administration on May 10, 2021 and entitled "Data Forwarding Method and Apparatus, Storage Medium, and Electronic Device", the disclosure of which is hereby incorporated by reference in its entirety.

### Technical Field

Embodiments of the present disclosure relate to the field of communications, and in particular, to a data forwarding method and apparatus, a storage medium, and an electronic device.

### Background

In a related technology, when a node forwards data, a multicast tree needs to be established so as to ensure that the data is accurately forwarded to a receiver. However, when adopting the data forwarding method, the speed and efficiency of data forwarding are relatively low.

### Summary

Embodiments of the present disclosure provide a data forwarding method and apparatus, a storage medium, and an electronic device, which may at least solve the problem of low data forwarding efficiency in a related technology.

According to an embodiment of the present disclosure, a data forwarding method is provided. The method includes: an ingress node of a Bit Indexed Explicit Replication (BIER) domain acquires traffic data to be forwarded of an instance; the ingress node encapsulates the traffic data by using a prefix of an address of the BIER domain and an instance label of the instance; and the ingress node forwards an encapsulated packet obtained by encapsulating the traffic data to a next-hop node of the BIER domain.

According to another embodiment of the present disclosure, a data forwarding method is further provided. The method includes: an egress node of a BIER domain acquires an encapsulated packet forwarded by a previous-hop node; the egress node parses the encapsulated packet to obtain from the encapsulated packet a prefix of an address of the BIER domain, an instance label of an instance, and data traffic to be forwarded; and the data traffic is forwarded to a receiving node corresponding to the instance label according to the instance label.

According to still another embodiment of the present disclosure, a data forwarding apparatus is provided, which includes: an acquiring unit, configured to control an ingress node of a BIER domain to acquire traffic data to be forwarded of an instance; an encapsulating unit, configured to control the ingress node to encapsulate the traffic data by using a prefix of an address of the BIER domain and an instance label of the instance; and a forwarding unit, configured to control the ingress node to forward an encapsulated packet obtained by encapsulating the traffic data to a next-hop node of the BIER domain.

As an exemplary implementation, the encapsulating unit includes: a splicing module, configured to splice the prefix of the address and the instance label into a character string; a setting module, configured to set a field of a BIER header as a type representing the character string; and an encapsulating module, configured to encapsulate the character string between the BIER header and the traffic data.

As an exemplary implementation, the encapsulating module is configured to use lowest 4 bytes of the character string to carry the instance label, or use 4 bytes after the prefix of the address in the character string to carry the instance label.

As an exemplary implementation, the instance is a Virtual Private Network (VPN) instance or a non-VPN instance. The apparatus is further configured to set different instance labels for different VPN instances in a case where the instance is the VPN instance, and set different instance labels for different non-VPN instances in a case where the instance is the non-VPN instance.

As an exemplary implementation, the apparatus is further configured to omit the same addresses in multicast addresses of different non-VPN instances, and determine remaining addresses as the instance labels of the different non-VPN instances.

As an exemplary implementation, the prefix of the address is a multicast reserved address prefix or a unicast reserved address prefix. The unicast reserved address prefix does not overlap with other routable unicast address prefixes, or the unicast reserved address prefix does not belong to a routable unicast address prefix.

As an exemplary implementation, the apparatus may further include a notifying unit, configured to notify a character string spliced by the prefix of the address and the instance label via signaling, or notify a prefix of the character string via signaling.

As an exemplary implementation, the notifying unit includes an adding module, configured to add the prefix of the character string to a tunnel identifier; or newly add a tunnel type or an identification bit to identify the prefix of the character string and add the prefix of the character string to a tunnel identifier; or newly add a Provider Multicast Service Interface (PMSI) Tunnel Attribute (PTA) type, where the newly added PTA type includes the prefix of the character string.

As an exemplary implementation, the notifying unit may further include a filling module, configured to: when adding the prefix of the character string to the tunnel identifier, or adding the tunnel type or the identification bit to identify the prefix of the character string and adding the prefix of the character string to the tunnel identifier, fill an instance value in the instance label; or add the character string to the tunnel identifier, and fill a preset value in the instance label, where the preset value indicates to display the instance label as an empty label.

As an exemplary implementation, the apparatus may further include an adding unit, configured to: when the ingress node encapsulates the traffic data by using the prefix of the address of the BIER domain and the instance label of the instance, add a type label of the instance to a character string spliced by the prefix of the address and the instance label, where the type label is used for identifying the instance as a VPN instance or a non-VPN instance.

According to yet another embodiment of the present disclosure, a data forwarding apparatus is provided. The apparatus includes: an acquiring unit, configured to control an egress node of a BIER domain to acquire an encapsulated packet forwarded by a previous-hop node; a parsing unit, configured to control the egress node to parse the encapsulated packet to obtain from the encapsulated packet a prefix of an address of the BIER domain, an instance label of an instance, and data traffic to be forwarded; and a forwarding unit, configured to control to forward the data traffic to a receiving node corresponding to the instance label according to the instance label.

According to still another embodiment of the present disclosure, a computer-readable storage medium is further provided. The computer-readable storage medium stores a computer program. The computer program, when running on a processor, causes the processor to perform the operations in any one of the method embodiments.

According to still another embodiment of the present disclosure, an electronic device is further provided. The electronic device includes a memory and a processor. The memory stores a computer program, and the processor is configured to run the computer program to perform the operations in any one of the method embodiments.

By virtue of the solution provided in the embodiments of the present disclosure, the ingress node encapsulates the traffic data by using the prefix of the address of the BIER domain and the instance label of the instance, so the egress node may determine a receiver according to the instance label by parsing the prefix of the address and the instance label, and transmit the traffic data to the receiver without establishing a multicast tree, thereby improving the data forwarding efficiency.

### Brief Description of the Drawings

Fig. 1 is a schematic structural diagram of a terminal for implementing a data forwarding method according to some embodiments of the present disclosure.
Fig. 2 is a structural block diagram of a data forwarding method according to some embodiments of the present disclosure.
Fig. 3 is a schematic diagram of an encapsulation format of a data forwarding method according to some embodiments of the present disclosure.
Fig. 4 is a flowchart of a data forwarding method according to some embodiments of the present disclosure.
Fig. 5 is a schematic diagram of a character string of a data forwarding method according to some embodiments of the present disclosure.
Fig. 6 is a structural block diagram of a data forwarding method according to some embodiments of the present disclosure.
Fig. 7 is a schematic diagram of a format of a PTA of a data forwarding method according to some embodiments of the present disclosure.
Fig. 8 is a schematic diagram of a PTA notification of a data forwarding method according to some embodiments of the present disclosure.
Fig. 9 is a schematic diagram of a newly added PTA type of the data forwarding method according to some embodiments of the present disclosure.
Fig. 10 is a schematic diagram of a character string of a data forwarding method according to some embodiments of the present disclosure.
Fig. 11 is a schematic diagram of a Type Length Value (TLV) of a data forwarding method according to some embodiments of the present disclosure.
Fig. 12 is a schematic diagram of a TLV of a data forwarding method according to some embodiments of the present disclosure.
Fig. 13 is a schematic diagram of a character string of a data forwarding method according to some embodiments of the present disclosure.
Fig. 14 is a schematic diagram of an encapsulated packet of a data forwarding method according to some embodiments of the present disclosure.
Fig. 15 is a flowchart of a data forwarding method according to some embodiments of the present disclosure.
Fig. 16 is a structural block diagram of a data forwarding apparatus according to some embodiments of the present disclosure.
Fig. 17 is a structural block diagram of a data forwarding apparatus according to some embodiments of the present disclosure.

### Detailed Description

Embodiments of the present disclosure are described in detail below with reference to the drawings and in conjunction with the embodiments.

It is to be noted that the terms "first", "second" and the like in the specification, claims and drawings of the present disclosure are used to distinguish similar objects, and are not used to describe a specific sequence or a precedence order.

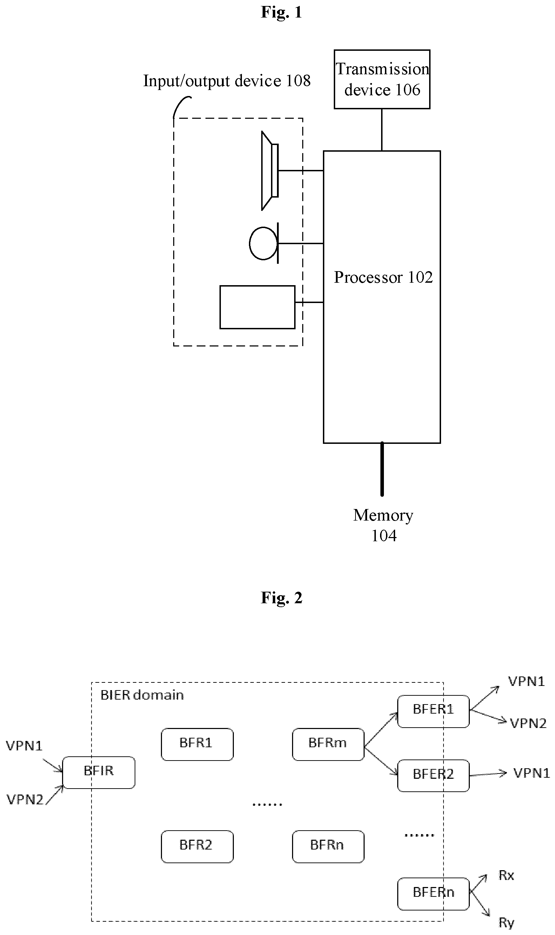

The method embodiments provided in the embodiments of the present disclosure may be executed in a mobile terminal, a computer terminal or a similar computing apparatus. Taking running in the mobile terminal as an example, Fig. 1 is a block diagram of a hardware structure of a terminal for implementing a data forwarding method according to some embodiments of the present disclosure. As shown in Fig. 1, the terminal may include one or more (only one shown in Fig. 1) processors 102 (the one or more processors 102 may include, but are not limited to, processing apparatuses such as a Microprocessor Control Unit (MCU) or a Field Programmable Gate Array (FPGA)) and a memory 104 for storing data. The terminal may also include a transmission device 106 for implementing a communication function and an input/output device 108. Those having ordinary skill in the art may understand that the structure shown in Fig. 1 is only exemplary and does not limit the structure of the mobile terminal. For example, the mobile terminal may also include more or fewer components than those shown in Fig. 1, or has a different configuration from that shown in Fig. 1.

The memory 104 may be configured to store a computer program, for example, a software program and modules of application software, such as a computer program corresponding to the data forwarding method in the embodiments of the present disclosure. The one or more processors 102 execute various functional applications and data processing, that is, implements the method by running the computer program stored in the memory 104. The memory 104 may include a high speed random access memory or a non-volatile memory such as one or more magnetic storage apparatuses, flash memories, or other non-volatile solid state memories. In some instances, the memory 104 may further include memories remotely located relative to the one or more processors 102. These remote memories may be connected to the mobile terminal through a network. The examples of the network include, but are not limited to, the Internet, the Intranet, a local area network, a mobile communication network, and combinations thereof.

The transmission device 106 is configured to receive or transmit data through a network. Specific examples of the network may include a wireless network provided by a communication provider of the mobile terminal. In one instance, the transmission device 106 includes a Network Interface Controller (NIC) that can be connected to other network devices through a base station to communicate with the Internet. In one instance, the transmission device 106 may be a Radio Frequency (RF) module, which is configured to communicate with the Internet in a wireless manner.

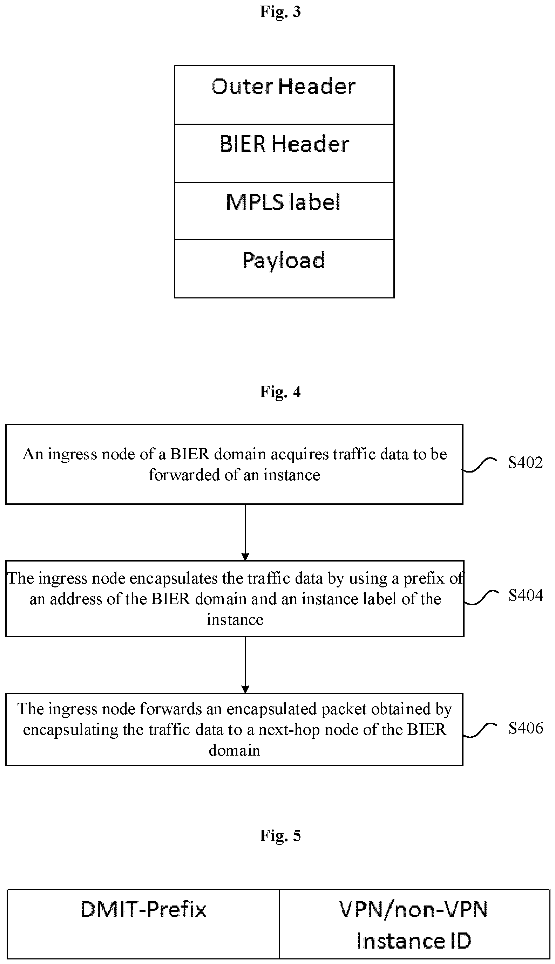

The present embodiment provides a Mobile Virtual Private Network (MVPN) technology and an Ethernet Virtual Private Network (EVPN) technology. VPN instances are distinguished based on Multi-protocol Label Switching (MPLS) Labels. As shown in Fig. 2, a Bit-Forwarding Ingress Router (BFIR) may receive traffic from VPN1 and VPN2. BFIR1 may receive traffic from the VPN1 and the VPN2, and BFIR2 only receives traffic from the VPN1. When the BFIR receives the traffic from a certain VPN, a corresponding VPN identification value needs to be encapsulated for the traffic. For a received packet, Bit-Forwarding Egress Router (BFER), e.g., BFER1BFER2 can only forward the packet to a corresponding VPN receiver after determining which VPN the received packet belongs to based on the VPN identification value. In RFC8556, when the ingress device BFIR and the egress device BFER perform protocol interaction based on a MultiProtocol-Border Gateway Protocol (MP-BGP), a Provider Multicast Service Interface (PMSI) Tunnel Attribute (PTA) will be transmitted. A tunnel type BIER, and correspondingly, an MPLS Label field for identifying different VPN instances are newly added to the attribute. The method may realize MPLS-based VPN isolation. When the BFIR receives the traffic from a certain VPN, the traffic is encapsulated after a BFIR header as a payload, and the MPLS Label used for identifying the VPN is carried between the BFIR header and the payload. When the BFER receives the packet forwarded through the BFIR, an encapsulation format is in an encapsulation form as shown in Fig. 3. After an outer encapsulation header and a BIER header are processed, a Proto field in the BIER header indicates the subsequent content is of an MPLS type, then the BFER reads the MPLS label after the BIER header and determines which VPN the packet belongs to according to the MPLS label, and then forwards the payload to the corresponding receiver. For example, when the read-out MPLS label is the same as the MPLS label carried in the PTA notified by the BFIR for a route of the VPN1, the packet will be forwarded to the receiver that belongs to the VPN1. The method can solve the problem about identifying the VPN when the MVPN/EVPN is used as a BIER Overlay. If the BIER Overlay protocol is a protocol such as Multicast Listener Discover (MLD) or a Protocol Independent Multicast (PIM), when there is no MP-BGP notification, in order to distinguish different MLD or PIM instances, and use in combination with an IPv6 mechanism, the embodiments of the present disclosure provide a data forwarding method. Fig. 4 is a flowchart of a data forwarding method according to some embodiments of the present disclosure. As shown in Fig. 4, the flowchart includes the following operations S402 to S406.

At S402, an ingress node of a BIER domain acquires traffic data to be forwarded of an instance.

At S404, the ingress node encapsulates the traffic data by using a prefix of an address of the BIER domain and an instance label of the instance.

At S406, the ingress node forwards an encapsulated packet obtained by encapsulating the traffic data to a next-hop node of the BIER domain.

Through the operations, the ingress node encapsulates the traffic data by using the prefix of the address of the BIER domain and the instance label of the instance, so an egress node may determine a receiver according to the instance label by parsing the prefix of the address and the instance label, and transmit the traffic data to the receiver without establishing a multicast tree, thereby improving the data forwarding efficiency. The operations may be executed by a node such as a base station and a terminal, but not limited thereto.

In some exemplary implementations of the present embodiment, the ingress node of the BIER domain acquires the traffic data to be forwarded of the instance, the traffic data needs to be forwarded to an egress node through data forwarding, and then the egress node forwards the data to a receiver. After the ingress node of the BIER domain acquires the traffic data, the traffic data is encapsulated by using a prefix of an address of the BIER domain and an instance label of the instance, and an encapsulated packet obtained by encapsulating is forwarded to a next-hop node. When acquiring the encapsulated packet, the egress node directly decapsulates the encapsulated packet, obtains the prefix of the address and the instance label, determines a receiver according to the instance label, and forwards the traffic data to the receiver.

The BIER (RFC8279) adopted in the present embodiment is a novel multicast data forwarding technology. A node at a network edge is represented by using one bit. Multicast traffic is transmitted in an intermediate network. A specific BIER header is additionally encapsulated for the multicast traffic. This packet header labels all destination nodes, e.g., BFERs, of the multicast traffic in a form of a bit string. The forwarding node of the intermediate network performs routing according to the bit, so as to ensure that the multicast traffic can be transmitted to all destination nodes. The forwarding node of the intermediate network forms a table for guiding BIER forwarding through a routing protocol in advance, and completes the forwarding of a packet to a destination node according to a Bit Index Forwarding Table (BIFT) algorithm when receiving the traffic encapsulated with the BIER header. An ingress node BFIR of the BIER domain encapsulates the multicast traffic entering the BIER domain as a payload of the BIER header. Through the forwarding of an intermediate node, the egress node BFER of the BIER domain receives a BIER packet, removes the BIER header, and forwards the traffic data Payload to a corresponding receiver. The BIER data plane forwarding technology does not require establishment of a multicast tree, and therefore eliminates the delay caused by the establishment of the multicast tree. When a link or node problem occurs in the network, the convergence rate of BIER is basically the same as an Open Shortest Path First (OSPF) or Intermediate System-to-Intermediate System (ISIS) protocol, which greatly reduces the delay.

In the present embodiment, in order to construct a BIER forwarding table entry, a protocol such as OSPF or ISIS will support a BIER information notification through signaling extension. All nodes in the BIER domain will receive BIER information of other nodes, and construct the BIER forwarding table on this basis. The protocol such as OSPF or ISIS that provides signaling extension to support BIER information interaction is referred to as a BIER Underlay technology.

For an ingress device BFIR of the BIER domain, if a certain multicast traffic is required to be transmitted, it is necessary to know which egress device BFER of the BFER domain needs this multicast traffic. Therefore, there needs to be a signaling interaction between the BFIR and the BFER. The signaling interaction technology is referred to as a BIER Overlay technology. An intermediate Bit-Forwarding Router (BFR) device which is purely used for BIER forwarding does not need to know multicast traffic information.

The BIER Overlay technology includes MVPN, EVPN, MLD, PIM, and the like. The MVPN and the EVPN may be used for supporting a VPN technology of layer 3 or layer 2 to realize traffic isolation between different VPNs. Therefore, by the BIER Overlay technology, in addition to allowing the ingress device to clearly know the set of egress devices for a certain multicast traffic so that the ingress device can properly perform BIER encapsulation, a certain mechanism is also required to isolate different VPNs to meet the deployment requirements of different applications.

As an exemplary implementation, the operation that the ingress node encapsulates the traffic data by using the prefix of the address in the BIER domain and the instance label of the instance includes that: the prefix of the address and the instance label are spliced into a character string; a field of a BIER header is set as a type representing the character string; and the character string is encapsulated between the BIER header and traffic data.

As an exemplary implementation, the operation that the prefix of the address and the instance label are spliced into the character string includes: lowest 4 bytes of the character string are used to carry the instance label; or 4 bytes after the prefix of the address in the character string are used to carry the instance label.

As an exemplary implementation, the instance is a VPN instance or a non-VPN instance. Different instance labels are set for different VPN instances in a case where the instance is the VPN instance, and different instance labels are set for different non-VPN instances in a case where the instance is the non-VPN instance.

As an exemplary implementation, in the case where the instance is the non-VPN instance, the operation that different instance labels are set for different non-VPN instances includes: the same addresses in multicast addresses of different non-VPN instances are omitted, and remaining addresses are determined as the instance labels of the different non-VPN instances.

As an exemplary implementation, the prefix of the address is a multicast reserved address prefix or a unicast reserved address prefix. The unicast reserved address prefix does not overlap with other routable unicast address prefixes, or the unicast reserved address prefix does not belong to a routable unicast address prefix.

As an exemplary implementation, the method may further include: a character string spliced by the prefix of the address and the instance label is notified via signaling, or a prefix of the character string is notified via signaling.

As an exemplary implementation, the operation that the character string spliced by the prefix of the address and the instance label is notified via the signaling or the prefix of the character string is notified via the signaling includes: the prefix of the character string is added to a tunnel identifier; or a tunnel type or an identification bit is newly added to identify the prefix of the character string, and the prefix of the character string is added to a tunnel identifier; or a PTA type is newly added, where the newly added PTA type includes the prefix of the character string.

As an exemplary implementation, the operation that the prefix of the character string is added to the tunnel identifier, or the tunnel type or the identification bit is newly added to identify the prefix of the character string, and the prefix of the character string is added to the tunnel identifier includes: an instance value is filled in the instance label, or the character string is added to the tunnel identifier, and a preset value is filled in the instance label, where the preset value indicates to display the instance label as an empty label.

As an exemplary implementation, when the ingress node encapsulates the traffic data by using the prefix of the address in the BIER domain and the instance label of the instance, the method may further include: a type label of the instance is added to a character string spliced by the prefix of the address and the instance label, where the type label is used for identifying the instance as a VPN instance or a non-VPN instance.

In the present embodiment, a novel Service ID may be composed in one of the following manners.

Manner 1, a multicast/unicast reserved address prefix is combined with a VPN instance label.

The manner is described in combination with Embodiment 1. Taking a network as shown in Fig. 2 as an example, a new multicast reserved address prefix is applied, for example, FF02:0001/32 (the value is only an example, the value may be a formally applied multicast reserved address prefix, or may be valid only on an edge device in one BIER domain). The BIER edge device, including BFIR and BFER, can accurately identify this reserved address prefix as a prefix not used for routing forwarding, but used for identifying that the value is a composition of the Service ID. The remaining part in the format of the Service ID may carry other content, as shown in Fig. 5.

When MVPN or EVPN is deployed, the Service ID needs to have a value that can identify different VPN instances. In order to distinguish different VPN instances, different MPLS labels may be assigned to different VPN instances. For example, the BFIR may assign an MPLS label 10 to VPN1, and may assign an MPLS label 20 to VPN2.

When the BFIR receives a packet from the VPN1 and performs BIER encapsulation, the BFIR combines the multicast reserved address prefix with the MPLS Label to obtain a complete Service ID, for example, FF02:0001::A. The value is encapsulated between the BIER header and a payload (the payload is the traffic from the VPN1), and a Proto field of the BIER header is set as the type representing the Service ID. Other parts of the BIER header, such as inherent technical encapsulation in RFC8296, will not be elaborated herein. After being encapsulated, the packet is forwarded to a next-hop device in the BIER domain.

After being forwarded by the device in the BIER domain, the packet reaches the BFER1. After the BFER1 processes the BIER header, the BFER1 parses out the Proto field which is set as a type representing the Service ID, and then reads and parses the Service ID after the BIER header. When determining that the prefix of the Service ID is the multicast reserved address prefix, the BFER1 knows that other parts of the Service ID need to be further parsed. In this example, the BFER1 reads the lowest 4 bytes which indicate a value of 10, and according to the value, the BFER1 knows that the lowest 4 bytes correspond to VPN1. Therefore, after removing the BIER header and the Service ID, the BFER1 forwards the payload to the receiver in the VPN1. The processing on BFER2 is similar to that on the BFER1.

It is to be noted that, in this example, the lowest 4 bytes of the Service ID are used for carrying an instance value. In practical applications, the instance value may also be carried after the reserved address prefix, and the 4 bytes after the reserved address prefix are used for carrying the instance value, for example, the complete Service ID is encapsulated as FF02:0001:0A00::. Of course, the instance value may also be carried at other locations, as long as the BFIR and the BFER can correctly encapsulate and process the instance value.

In addition, the example here uses a prefix of FF02:0001/32. The prefix may be selected as required, for example, other prefixes may be used, such as FF04:0001/32.

Manner 2, a multicast/unicast reserved address prefix is combined with a non-VPN instance label.

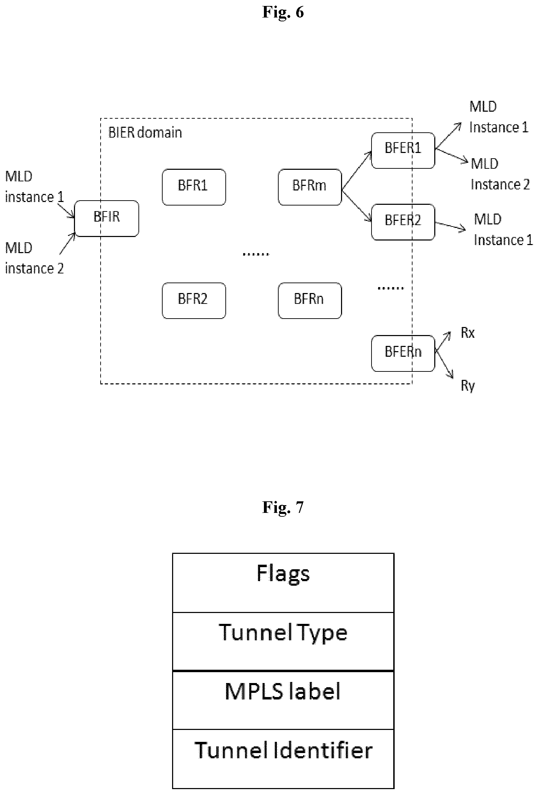

The manner is described in combination with Embodiment 2. Taking a network as shown in Fig. 6 as an example, some BIER Overlay protocols in the network support a plurality of non-VPN instances, for example, both the BFIR and the BFER1 are connected with 2 MLD instances which are distinguished by IPv6 multicast addresses. As an Overlay protocol of the BIER, the signaling of the MLD is completely different from that in an MVPN/EVPN scenario. According to draft-ietf-bier-mld, different instances of the MLD may use different IPv6 multicast addresses as their instance labels, for example, MLD instance 1 may be identified by using FF02::1, and MLD instance 2 may be identified by using FF02::FC. Through the notification of the MLD protocol, the BFIR and the BFER learn the conditions of receivers corresponding to different MLD instances, for example, the BFIR learns that both the BFER1 and the BFER2 are connected with the MLD instance 1, and the BFER1 is further connected with the MLD instance 2.

In order to distinguish different MLD instances, the multicast reserved address prefix may be spliced with the part used for identifying different instances to form a complete Service ID. As shown in Fig. 5, for example, if the prefixes of the MLD instances are all FF02, then the same prefix part may be omitted, and the differing part may be combined with the multicast reserved address prefix to obtain the Service ID, for example, FF02:0001::1 is used as the Service ID for identifying the MLD instance 1, and FF02:0001::FC is used as the Service ID for identifying the MLD instance 2.

The BFIR receives the traffic from the MLD instance 1 and needs to forward the traffic to the BFER1 and the BFER2, the BFIR encapsulates FF02:0001::1 between the BIER header and a payload (a packet from the MLD instance 1), and Proto in the BIER header is set as a type representing the Service ID. Other parts of the BIER header, such as inherent technical encapsulation, will not be elaborated herein. After being encapsulated, the packet is forwarded to a next-hop device in the BIER domain.

After being forwarded by the device in the BIER domain, the packet reaches the BFER1. After the BFER1 processes the BIER header, the BFER1 parses out the Proto field which is set as a type representing the Service ID, and then reads and parses the Service ID after the BIER header. When determining that the prefix of the Service ID is the multicast reserved address prefix, the BFER1 knows that other parts of the Service ID need to be further parsed. In this example, the BFER1 reads the lowest 4 bytes which indicate a value of 1, and according to the value, the BFER1 knows that the lowest 4 bytes correspond to the MLD instance 1. Therefore, after removing the BIER header and the Service ID, the BFER1 forwards the payload to the receiver in the MLD instance 1. The processing on BFER2 is similar to that on the BFER1.

Although the present embodiment takes the MLD as an example, the processing mechanism for the PIM protocol is similar, which will not be elaborated herein.

The MLD instances may be distinguished based on IPv4 multicast addresses, for example, the MLD instance 1 is identified by using a multicast address 224.0.0.1, and the MLD instance 2 is identified by using a multicast address 224.0.0.120. When the BFIR encapsulates the packet from the MLD instance and generates the Service ID, different parts in the address may be spliced with the multicast reserved address similar to the processing of the MLD instance of IPv6. Alternatively, the multicast address of IPv4 may also be directly spliced with the multicast reserved address, for example, for traffic encapsulation of the MLD instance 1, the Service ID formed by splicing may be FF02:0001::E000:0001.

It is to be noted that, in this example, the lowest 4 bytes of the Service ID are used for carrying an instance value. In practical applications, the instance value may also be carried after the reserved address prefix, and the 4 bytes after the reserved address prefix are used for carrying the instance value, for example, the Service ID of the MLD instance 2 is encapsulated as FF02:0001:FC00::. The instance value may also be carried at other locations, as long as the BFIR and the BFER can correctly encapsulate and process the instance value.

Further, if Embodiment 1 and Embodiment 2 are deployed simultaneously, 2 bytes immediately following the multicast reserved address (or other locations, adjusted according to actual deployment) may be used for type identification, for example, the 2 bytes being set as 1 indicates a VPN instance, and the 2 bytes being set as 0 indicates a non-VPN instance. In this way, when the BFIR encapsulates the Service ID from the VPN1 according to Embodiment 1, the Service ID may be encapsulated as FF02:0001:0100::A or FF02:0001:010A::. When the BFIR encapsulates the Service ID for the MLD instance 1 according to Embodiment 2, the Service ID may be encapsulated as FF02:0001:0200::1 or FF02:0001:0201::. Similarly, other prefixes such as FF04:0001/32 may also be selected.

In addition, the multicast reserved address prefix is used in Embodiment 1 and Embodiment 2 for the generation of the Service ID. Actually, a unicast reserved address may also be applied for this purpose. This unicast reserved address cannot be used for other routing purposes by the network, but only for the composition of the Service ID, that is, only for distinguishing instances when the BFER receives the packet. In order to avoid confusion with other unicast routes in the network, the unicast address prefix is not to be consistent or overlap with other routable unicast routing prefixes, for example, in Fig. 1, the routable unicast routing prefix used by each edge and intermediate forwarding device is 2001:1001::/32, which constructs a BIER forwarding table entry as a BFR-Prefix. The Service ID cannot be constructed by using this prefix or a prefix that belongs to this prefix or a prefix that overlaps with this network segment, for example, 2001:1001:2002::/64 cannot be used. Assuming that a prefix 5001:1001/64 does not belong to a routable unicast address prefix in this network, and does not overlap with other routable unicast address prefix, this prefix 5001:1001/64 may be used as a prefix for forming the Service ID.

The Service ID may be notified through BIER Overlay, and the notification manner may be one of the following.

Manner 1, an existing BIER Overlay notification is multiplexed, including, but not limited to, MP-BGP, MLD, PIM, and the like.

Manner 2, the BIER Overlay protocol is modified or extended, including, but not limited to, MP-BGP, MLD, PIM, and the like.

In Manner 1 and Manner 2, the VPN instance labels or other non-VPN instance labels may be combined with the address prefix to form the Service ID of a complete format (16 bytes/128 bits or other lengths).

In Manner 1 and Manner 2, the complete Service ID may also be directly notified, and splicing and combining processes are omitted.

The notification is described in combination with Embodiment 3.

When devices of Embodiment 1 and Embodiment 2 in the network can accurately identify the reserved address prefix in the Service ID, the Service ID may be generated by combining the existing BIER Overlay signaling notification. For example, in Embodiment 1, the signaling used by MVPN/EVPN is based on an MP-BGP protocol, and the notification content includes a PTA. The format of the PTA is as shown in Fig. 7. The MPLS Label may be used for forming identification values for different VPNs, and may be combined with the reserved address prefix to form the Service ID, as described in Embodiment 1. Alternatively, as described in Embodiment 2, different parts may be directly selected from the signaling interaction multicast address of the MLD instance, or the signaling interaction address may be combined with the reserved address prefix to form the Service ID.

However, the prefix (which is called a DMIT-prefix for short) of the Service ID or the Service ID may also be notified through a signaling as follows.

Taking the network as shown in Fig. 2 as an example, when the BFIR uses overlay signaling (such as an MP-BGP signaling notification in Embodiment 1, or MLD/PIM signaling in Embodiment 2) to notify the Service ID, the prefix of the Service ID may be carried, for example, 5001:1001::/64 may be notified as a DMIT-prefix. After being notified, the prefix and the MPLS Label are combined into the Service ID, referring to the manner in Embodiment 1.

Alternatively, a complete Service ID may be notified directly. In this way, the Service ID may be directly used for BFIR encapsulation and BFER decapsulation and forwarding without combining or splicing.

The BFIR may notify the DMIT-prefix or the Service ID based on the MP-BGP in one of the following notification manners.

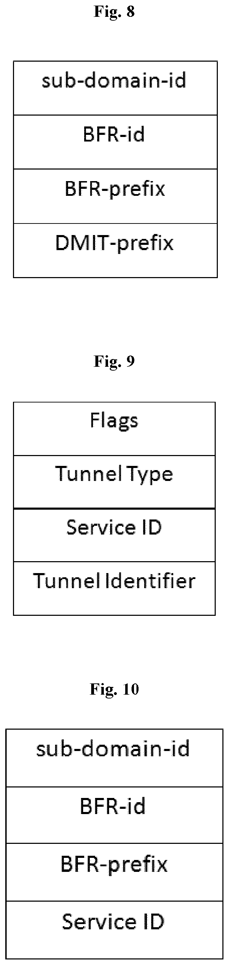

Manner 1: The original PTA notification is used, for example, Flag, Tunnel Type, and MPLS Label as shown in Fig. 7 are all notified as usual. In a Tunnel identifier, in addition to the existing three parts, i.e., a sub-domain-id, a BFR-id, and a BFR-prefix, a DMIT-prefix is added, as shown in Fig. 8.

Manner 2: The original PTA notification format is used, but a tunnel type representing the existence of information used by the BFER for decapsulating and indicating VPN/non-VPN search is newly added. In addition, in the Tunnel Identifier, a DMIT-prefix is added with reference to the manner in the notification manner 1. Alternatively, the tunnel type is not added, and one bit is newly added to the flag, where the bit being 1 represents that a DMIT-prefix is carried.

Manner 3: A new PTA type is added, for example, a P-Multicast Service ID Interface Tunnel type is newly added, as shown in Fig. 9. When adopting the new PTA type, the Flags, the Tunnel type, the Tunnel Identifier have the same definition as the existing PTA type, but the original MPLS Label is replaced with a DMIT-prefix with the length of 16 bytes.

In the above three notification manners, the notified DMIT-prefix may also be replaced with a complete Service ID, for example, in the notification Manner 1 or Manner 2, a complete Service ID may be newly added in the tunnel identifier, as shown in Fig. 10. In this case, the prefix does not need to be spliced with other fields to generate the Service ID, and the BFIR and the BFER directly use this value for encapsulation and decapsulation and forwarding.

Further, in the notification Manner 1 or Manner 2, the MPLS Label field may be filled in any one of the following manners.

The MPLS Label field may be filled with an identification value assigned by the BFIR for the VPN. As described in Embodiment 1, the DMIT-prefix notified in the Tunnel Identifier is only a prefix, for example, 5001:1001::/64. The BFIR/BFER combines the prefix and the value in the MPLS Label to form a complete Service ID. The BFIR encapsulates the address into the packet corresponding to the instance. The BFER parses the packet according to the value, and forwards the packet to a correct instance receiver.

The MPLS Label field is filled with a certain preset value or a value representing an explicit empty label. A complete Service ID is directly notified in the Tunnel Identifier. In addition to including a prefix that indicates decapsulating and instance search, the complete Service ID further includes an identification value of the instance. In this way, a combination operation on the BFIR/BFER may be omitted, and the BFIR/BFER directly uses this value for encapsulation and decapsulation.

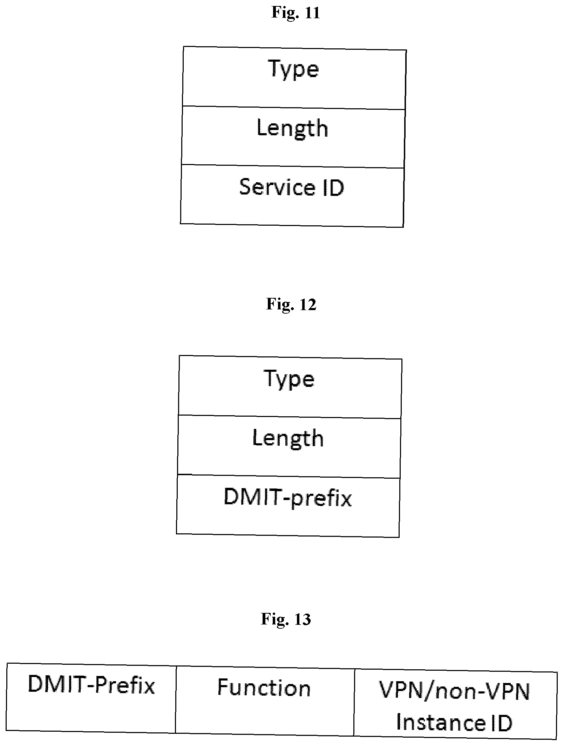

When a non-VPN instance is notified by using the MLD as the overlay protocol, a Service ID TLV may be newly added to the MLD notification information, for example, when notifying the sub-domain-id, the BFR-id, and the BFR-prefix TLV related to the BIER according to draft-ietf-bier-mld, a TLV as shown in Fig. 11 is also carried to notify the value of the Service ID together. In this case, the Service ID is a complete value, the BFIR and the BFER may directly use this value for encapsulation and decapsulation, and a splicing process in Embodiment 1 or Embodiment 2 is omitted. Alternatively, only the DMIT-prefix may be notified by using the TLV format similar to Fig. 12, and then a complete Service ID is generated in a splicing manner according to Embodiment 2.

When a non-VPN instance is notifies by using the PIM protocol as the overlay protocol, the manner is similar to MLD, that is, a TLV is newly added, which will not be elaborated herein.

Manners for forming the Service ID may also include the following operations.

A new Function is applied for indicating a new behavior of decapsulating the packet and querying a multicast forwarding table entry of the corresponding instance. The VPN or non-VPN instance label is placed at the location of Argument, and a complete Service ID is formed by prefix+Function+Argument.

The format of the Service ID may have a length of 16 bytes which are the same as an IPv6 address, or may also have other lengths which may be determined according to actual deployment requirements. The embodiments of the present disclosure take the Service ID being 16 bytes, and the same representation method as the IPv6 address as an example.

Description is further made in combination with Embodiment 4.

In the above Embodiment 1/2/3, a new Function may also be defined. Referring to RFC8986, a new SRv6 Endpoint Behavior is applied to represent DMIT, that is, decapsulating the packet, searching the instance and forwarding the packet. In this case, the Service ID may be formed in a manner as shown in Fig. 13. One value, for example, 0x4A, may be applied for representing VPN/non-VPN instance searching. Alternatively, two values may be applied, for example, 0x4A is used for representing the VPN instance searching, and 0x4B is used for representing the non-VPN instance searching. When the Service ID is formed, with reference to the definition of the RFC8986, the Service ID is combined according to Prefix+Function+Argument. For example, the Service ID may be formed by splicing the DMIT prefix, the new Function, and the VPN/non-VPN instance label. This method is applicable to the manners based on the reserved address in Embodiment 1/2, or the manner based on the notified address prefix in Embodiment 3. The Function, the address prefix, and the instance label together form the Service ID.

For example, in Embodiment 1, after the new Function is added, the Service ID formed for the VPN1 instance may be FF02:0001:004A::A. When the VPN instance and non-VPN instance are deployed simultaneously, and the instance identification values for the VPN instance and non-VPN instance are completely different, only one Function value is used. When the BFER receives and processes a packet, the BFER knows, according to the function value, that an instance identification value needs to be read. After reading the instance identification value, the BFER determines the instance to which the instance identification value belongs, decapsulates the packet (that is, removes the BIER header and the Service ID), and forwards the payload to the receiver.

When the VPN instance and the non-VPN instance are deployed simultaneously, and the identification values of the VPN instance and the non-VPN instance overlap, for example, the MPLS label assigned to the VPNx instance is FD, and the label value of a certain MLD instance is also FD, if the VPN instance and the non-VPN instance are not distinguished, the BFER may identify the MLD instance as the VPN instance by mistake, or identify the VPN instance as the MLD instance by mistake. Therefore, another Function is required for distinguishing in this case. In a scenario in which Embodiment 1 and Embodiment 2 are implemented simultaneously, the Service ID formed for VPNx may be FF02:0001:004A::00FD, and the Service ID formed for the MLD instance x of the non-VPN may be FF02:0001:004B::00FD.

When the BFIR encapsulates the packet of the VPNx, the FF02:0001:004A::00FD is encapsulated as the Service ID. When the BFIR encapsulates the packet of the non-VPN instance x, the FF02:0001:004B::00FD is encapsulated as the Service ID. The encapsulation manner is the same that in Embodiment 1 and Embodiment 2, which will not be elaborated herein.

When the BFER receives the packet, a decapsulating process is similar to that in Embodiment 1 and Embodiment 2. When the Function in the Service ID is processed, the BFER distinguishes between the VPN instance and the non-VPN instance according to the Function value, decapsulates the packet (that is, removes the BIER header and the Service ID), and forwards the packet to the receiver in a correct instance.

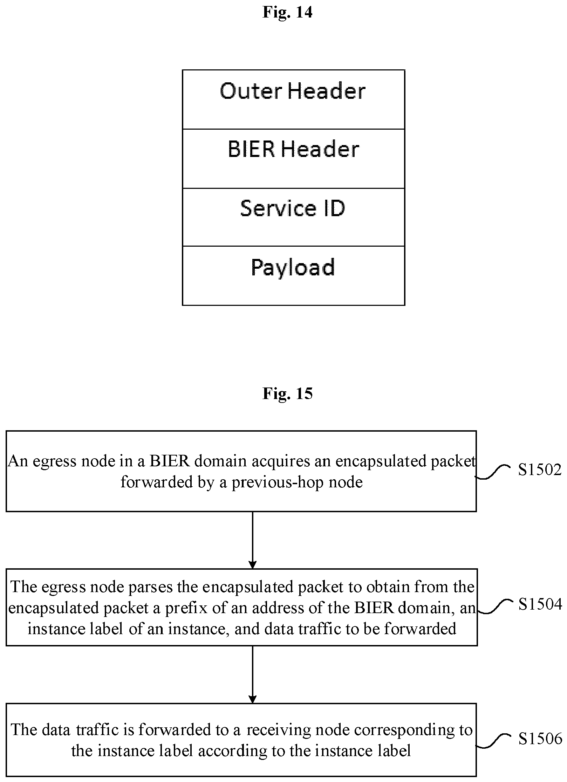

In the present embodiment, signaling notification is performed between the BFIR and the BFER through the BIER Overlay protocol, and the BFER learns the correspondence between the Service ID and the VPN instance/non-VPN instance. When the BFIR encapsulates the packet and transmits the packet to the BFER, the BFIR encapsulates the Service ID between the BIER header and the payload, and sets the Proto in the BIER header as a type representing the Service ID. The encapsulated packet is as shown in Fig. 14. After the BFER receives the packet, the BFER reads and processes the Service ID value according to the Proto indication in the BIER header, determines the corresponding VPN or non-VPN instance, decapsulates the packet, and forwards the packet to the corresponding receiver. For the MVPN, the VPN may be based on an IPv4 or IPv6 network, and the solution in the embodiments of the present disclosure is applicable to both cases.

The above embodiments may be combined according to different networking environments, so as to adapt to various BIER deployment scenarios. Therefore, the VPN or the non-VPN instance can be determined accurately by processing according to the new Service ID mechanism, so as to ensure correct forwarding of the packet. The VPN or non-VPN notification based on the BIER Overlay protocol can be supported, so as to accelerate the application and deployment of the BIER technology in a new network, such as the IPv6 network.

Through the description of the above implementations, those having ordinary skill in the art can clearly understand that the method of the above embodiments may be implemented by means of software plus a necessary general hardware platform, and of course, may also be implemented through hardware, but in many cases, the former is a better implementation. Based on such an understanding, the essence of the technical solutions of the embodiments of the present disclosure or a part thereof that contributes to the related technologies may be embodied in a form of a software product. The computer software product is stored in a storage medium (for example, a Read-Only Memory (ROM)/a Random Access Memory (RAM), a magnetic disk, or an optical disc), and includes several instructions for instructing a terminal device (which may be a mobile phone, a computer, a server, network device, or the like) to perform the methods of various embodiments of the present disclosure.

The embodiments of the present disclosure further provide a data forwarding method, as shown in Fig. 15. The method includes the following operations.

At S 1502, an egress node in a BIER domain acquires an encapsulated packet forwarded by a previous-hop node.

At S1504, the egress node parses the encapsulated packet to obtain from the encapsulated packet a prefix of an address of the BIER domain, an instance label of an instance, and data traffic to be forwarded.

At S 1506, the data traffic is forwarded to a receiving node corresponding to the instance label according to the instance label.

Through the operations, the ingress node encapsulates the traffic data by using the prefix of the address of the BIER domain and the instance label of the instance, so an egress node may determine a receiver according to the instance label by parsing the prefix of the address and the instance label, and transmit the traffic data to the receiver without establishing a multicast tree, thereby improving the data forwarding efficiency. The operations may be executed by a node such as a base station and a terminal, but not limited thereto.

For other examples of the present embodiment, please refer to the described examples, which will not be elaborated herein.

In the embodiments, a packet forwarding apparatus is also provided. The apparatus is configured to implement the above embodiments and exemplary implementations, and those have not been described and will not be elaborated. As used below, the term "module" may implement a combination of software and/or hardware of a predetermined function. Although the apparatus described in the following embodiments is preferably implemented in software, hardware, or a combination of software and hardware, is also possible and contemplated.

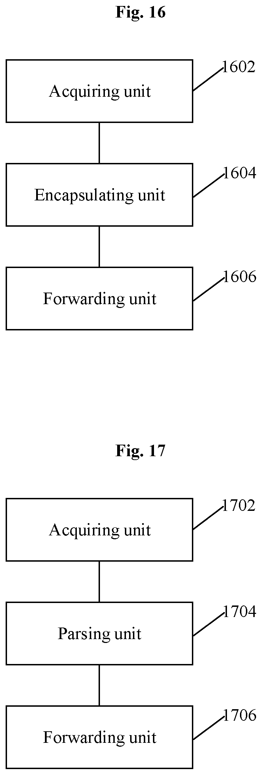

Fig. 16 is a structural block of a data forwarding apparatus according to some embodiments of the present disclosure. As shown in Fig. 16, the apparatus includes an acquiring unit 1602, an Encapsulating unit 1604, and a forwarding unit 1606.

The acquiring unit 1602 is configured to control an ingress node of a BIER domain to acquire traffic data to be forwarded of an instance.

The Encapsulating unit 1604 is configured to control the ingress node to encapsulate the traffic data by using a prefix of an address of the BIER domain and an instance label of the instance.

The forwarding unit 1606 is configured to control the ingress node to forward an encapsulated packet obtained by encapsulating the traffic data to a next-hop node of the BIER domain.

Through the apparatus, the ingress node encapsulates the traffic data by using the prefix of the address of the BIER domain and the instance label of the instance, so the egress node may determine a receiver according to the instance label by parsing the prefix of the address and the instance label, and transmit the traffic data to the receiver without establishing a multi-cast tree, thereby improving the data forwarding efficiency. The execution body of the operations may be a node such as a base station and a terminal, but is not limited thereto.

For other examples of the present embodiment, please refer to the described examples, which will not be elaborated herein.

Fig. 17 is a structural block of a data forwarding apparatus according to some embodiments of the present disclosure. As shown in Fig. 17, the apparatus includes an acquiring unit 1704, a parsing unit 1704, and a forwarding unit 1706.

The acquiring unit 1702 is configured to control an egress node in a BIER domain to acquire an encapsulated packet forwarded by a previous-hop node.

The parsing unit 1704 is configured to control the egress node to parse the encapsulated packet to obtain from the encapsulated packet a prefix of an address of the BIER domain, an instance label of an instance, and data traffic to be forwarded.

The forwarding unit 1706 is configured to forward the data traffic to a receiving node corresponding to the instance label according to the instance label.

Through the apparatus, the ingress node encapsulates the traffic data by using the prefix of the address of the BIER domain and the instance label of the instance, so the egress node may determine a receiver according to the instance label by parsing the prefix of the address and the instance label, and transmit the traffic data to the receiver without establishing a multicast tree, thereby improving the data forwarding efficiency. The execution body of the operations may be a node such as a base station and a terminal, but is not limited thereto.

For other examples of the present embodiment, please refer to the described examples, which will not be elaborated herein.

It is to be noted that each of the various modules may be implemented by software or hardware. For the latter, it may be implemented by, but not limited to, the following manners that the modules are all located in the same processor; or, the modules are located in different processors in any combination form respectively.

The embodiments of the present disclosure further provide a computer-readable storage medium. The computer-readable storage medium stores a computer program. The computer program, when running on a processor, causes the processor to perform the operations in any one of the abovementioned embodiments.

In one exemplary embodiment, the computer-readable storage medium may include, but is not limited to, various media capable of storing a computer program, such as a USB flash disk, a ROM, a RAM, a mobile hard disk, a magnetic disk, or a compact disk.

The embodiments of the present disclosure further provide an electronic device, including a memory and a processor. The memory stores a computer program. The processor is configured to run the computer program to perform the operations in any one of the method embodiments.

In one exemplary embodiment, the electronic device may further include a transmission device and an input/output device. The transmission device is connected to the processor. The input/output device is connected to the processor.

The specific examples in the present embodiment may refer to the examples described in the embodiments and exemplary implementations, which will not be elaborated herein in the present embodiment.

Those having ordinary skill in the art shall understand that the various modules or various operations in the present disclosure may be implemented by using a general computing apparatus. They may be centralized on a single computing apparatus or may be distributed on a network composed of a plurality of computing apparatuses. They may be implemented by using executable program codes of the computing apparatuses. Thus, they may be stored in a storage apparatus and executed by the computing apparatuses, the shown or described operations may be executed in a sequence different from this sequence under certain conditions, or they are manufactured into various integrated circuit modules respectively, or a plurality of modules or operations therein are manufactured into a single integrated circuit module. Therefore, the present disclosure is not limited to any specific hardware and software combination.

The foregoing descriptions are merely exemplary embodiments of the present disclosure, but are not intended to limit the present disclosure. Persons having ordinary skill in the art understand that the present disclosure may have various modifications and variations. Any modification, equivalent replacement, improvement or the like made within the principle of the present disclosure shall fall within the protection scope defined by the appended set of claims of the present disclosure.

## Claims

1. A data forwarding method, comprising:
acquiring, by an ingress node of a Bit Indexed Explicit Replication, BIER, domain, traffic data to be forwarded of an instance;
encapsulating, by the ingress node, the traffic data by using a prefix of an address of the BIER domain and an instance label of the instance; and
forwarding, by the ingress node, an encapsulated packet obtained by encapsulating the traffic data to a next-hop node of the BIER domain.

2. The method according to claim 1, wherein encapsulating, by the ingress node, the traffic data by using the prefix of the address of the BIER domain and the instance label of the instance comprises:
splicing the prefix of the address and the instance label into a character string;
setting a field of a BIER header as a type representing the character string; and
encapsulating the character string between the BIER header and the traffic data.

3. The method according to claim 2, wherein splicing the prefix of the address and the instance label into the character string comprises:
using lowest 4 bytes of the character string to carry the instance label, or
using 4 bytes after the prefix of the address in the character string to carry the instance label.

4. The method according to claim 1, wherein the instance is a Virtual Private Network, VPN, instance or a non-VPN instance; wherein
in a case where the instance is the VPN instance, different instance labels are set for different VPN instances; and
in a case where the instance is the non-VPN instance, different instance labels are set for different non-VPN instances.

5. The method according to claim 4, wherein in the case where the instance is the non-VPN instance, setting different instance labels for different non-VPN instances comprises:
omitting the same addresses in multicast addresses of the different non-VPN instances; and
determining remaining addresses as the instance labels of the different non-VPN instances.

6. The method according to claim 1, wherein the prefix of the address is a multicast reserved address prefix or a unicast reserved address prefix, wherein the unicast reserved address prefix does not overlap with other routable unicast address prefixes, or the unicast reserved address prefix does not belong to a routable unicast address prefix.

7. The method according to claim 1, further comprising:
notifying a character string spliced by the prefix of the address and the instance label via signaling, or notifying a prefix of the character string via signaling.

8. The method according to claim 7, wherein notifying the character string spliced by the prefix of the address and the instance label via the signaling, or notifying the prefix of the character string via the signaling comprises:
adding the prefix of the character string to a tunnel identifier; or
newly adding a tunnel type or an identification bit to identify the prefix of the character string, and adding the prefix of the character string to a tunnel identifier, or
newly adding a Provider Multicast Service Interface, PMSI, Tunnel Attribute, PTA, type, the added PTA type comprising the prefix of the character string.

9. The method according to claim 8, when adding the prefix of the character string to the tunnel identifier; or newly adding the tunnel type or the identification bit to identify the prefix of the character string, and adding the prefix of the character string to the tunnel identifier, comprising:
filling an instance value in the instance label; or
adding the character string to the tunnel identifier, and filling a preset value to the instance label, wherein the preset value indicates to display the instance label as an empty label.

10. The method according to claim 1, when encapsulating, by the ingress node, the traffic data by using the prefix of the address of the BIER domain and the instance label of the instance, further comprising:
adding a type label of the instance to a character string spliced by the prefix of the address and the instance label, wherein the type label is used for identifying the instance as a VPN instance or a non-VPN instance.

11. A data forwarding method, comprising:
acquiring, by an egress node of a Bit Indexed Explicit Replication, BIER, domain, an encapsulated packet forwarded by a previous-hop node;
parsing, by the egress node, the encapsulated packet to obtain from the encapsulated packet a prefix of an address of the BIER domain, an instance label of an instance, and data traffic to be forwarded; and
forwarding the data traffic to a receiving node corresponding to the instance label according to the instance label.

12. A data forwarding apparatus, comprising:
an acquiring unit, configured to control an ingress node of a Bit Indexed Explicit Replication, BIER, domain to acquire traffic data to be forwarded of an instance;
an encapsulating unit, configured to control the ingress node to encapsulate the traffic data by using a prefix of an address of the BIER domain and an instance label of the instance; and
a forwarding unit, configured to control the ingress node to forward an encapsulated packet obtained by encapsulating the traffic data to a next-hop node of the BIER domain.

13. A data forwarding apparatus, comprising:
an acquiring unit, configured to control an egress node of a Bit Indexed Explicit Replication, BIER, domain to acquire an encapsulated packet forwarded by a previous-hop node;
a parsing unit, configured to control the egress node to parse the encapsulated packet to obtain from the encapsulated packet a prefix of an address of the BIER domain, an instance label of an instance, and data traffic to be forwarded; and
a forwarding unit, configured to control to forward the data traffic to a receiving node corresponding to the instance label according to the instance label.

14. A computer-readable storage medium, wherein the computer-readable storage medium stores a computer program, and the computer program, when running on a processor, causes the processor to implement operations of the method according to any one of claims 1 to 10 or 11.

15. An electronic device, comprising a memory, a processor, and a computer program stored in the memory and capable of running on the processor, wherein the processor, when executing the computer program, implements operations of the method according to any one of claims 1 to 10 or 11.
